(19) Europäisches Patentamt
European Patent Office
Office européen des brevets

(11) Veröffentlichungsnummer: **0 534 297 A2**

(12) **EUROPÄISCHE PATENTANMELDUNG**

(21) Anmeldenummer: **92115802.8**

(22) Anmeldetag: **16.09.92**

(51) Int. Cl.5: **C08L 69/00**, C08K 5/52, //(C08L69/00,51:04,25:02,27:18)

(30) Priorität: **27.09.91 DE 4132264**

(43) Veröffentlichungstag der Anmeldung: **31.03.93 Patentblatt 93/13**

(84) Benannte Vertragsstaaten: **BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Niessner, Norbert, Dr.**
**Buhl'scher Hof 10**
**W-6701 Friedelsheim(DE)**
Erfinder: **Neumann, Rainer, Dr.**
**Im Palmengarten 9**
**W-6704 Mutterstadt(DE)**
Erfinder: **Ruppmich, Karl**
**Koenigsbacher Strasse 134**
**W-6700 Ludwigshafen(DE)**
Erfinder: **Seitz, Friedrich, Dr.**
**Von Wieser-Strasse 1**
**W-6701 Friedelsheim(DE)**
Erfinder: **Zeltner, Doris, Dr.**
**Viehtriftstrasse 94**
**W-6725 Roemersberg(DE)**

(54) **Flammwidrig ausgerüstete Formmasse.**

(57) Formmasse, enthaltend, bezogen auf die Summe von A bis E,

A: 40-90 Gew.-% eines halogenfreien Polycarbonats A,

B: 5-40 Gew.-% mindestens eines halogenfreien Pfropfpolymerisats B, aufgebaut aus einpolymerisierten Einheiten (bezogen auf B) von

B1: 40-80 Gew.-% eines Elastomeren B1 mit einer Glastemperatur von unter 0 °C.

B2: 20-60 Gew.-% einer Pfropfhülle B2 aus, bezogen auf B2

B21: 40-98 Gew.-% Styrol, $\alpha$-Methylstyrol, kernsubstituiertem Styrol und/oder $C_1$-$C_8$-Alkyl(meth)-acrylat,

B22: 50-1 Gew.-% (Meth)acrylnitril und/oder Maleinsäureanhydrid,

B23: 1-50 Gew.-% einer organischen Phosphorverbindung der allgemeinen Formel (I)

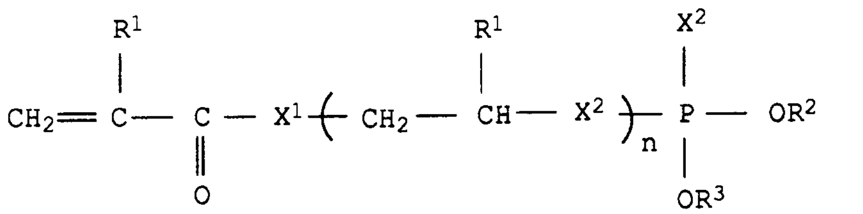

(I)

in der bedeutet:

$R^1$ = H oder $CH_3$

$R^2$, $R^3$ = jeweils unabhängig halogenfreies $C_1$-$C_8$-Alkyl oder halogenfreies, ggf. halogenfrei, substituiertes $C_6$-$C_{20}$-Aryl

$X^1$, $X^2$, $X^3$ = O, S, NR (wobei R Wasserstoff oder halogenfreies $C_1$-$C_8$-Alkyl bedeutet und

n = 0 bis 10 ist.

C: 5-40 Gew.-% eines halogenfreien thermoplastischen Copolymerisats C aus, bezogen auf C,

EP 0 534 297 A2

C1: 50 bis 95 Gew.-% Styrol, eines α-Alkylstyrols, kernsubstituierten Styrols und/oder $C_1$-$C_8$-Alkyl(meth)acrylats (C1)

C2: 4 bis 50 Gew.-% (Meth)acrylnitril, $C_1$-$C_8$-Alkyl(meth)acrylat und/oder Maleinsäureanhydrid (C2)

C3: 1 bis 46 Gew.-% einer halogenfreien Phosphorverbindung der Formel (I)

D: bis 20 Gew.-% einer halogenfreien Phosphorverbindung der Formel (II)

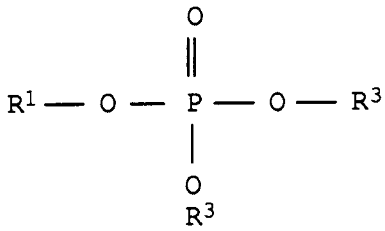

(II)

in der $R^1$, $R^2$, $R^3$ jeweils unabhängig halogenfreies $C_1$-$C_8$-Alkyl oder halogenfreies unsubstituiertes oder substituiertes $C_6$-$C_{20}$-Aryl bedeutet,

E: bis 5 Gew.-% eines Tetrafluorethylen-Polymerisats mit einer mittleren Teilchengröße von 0,05 bis 20 µm.

Die Erfindung betrifft eine flammwidrig ausgerüstete, chlor- und bromfreie Formmasse aus Polycarbonat und einem Pfropfcopolymeren aus einer kautschukartigen Pfropfgrundlage und einer Pfropfauflage sowie der zugehörigen Hartmatrix, nämlich Poly(styrol-co-acrylnitril).

Die brom- und chlorfreie Flanmschutzausrüstung von PC/ABS bzw. PC/ASA-Mischungen ist bekannt und z.B. beschrieben in den folgenden Druckschriften

(1) DE-A 35 23 314
(2) DE-A 35 23 316
(3) DE-A 38 19 081
(4) DE-A 38 24 356
(5) DE-A 36 28 904
(6) EP-A 287 895
(7) EP-A 286 965

Zur Flammschutzausrüstung werden neben organischen Phosphorsäureestern noch faserbildende PTFE-Polymere eingesetzt. Mischungen dieser Art haben zwar eine gute flammhemmende Wirkung, jedoch ungenügende Kerbschlagzähigkeit. Außerdem führt die zu einer Einstufung nach UL 94 notwendige Menge an organischen Phosphorverbindungen zu einer erheblichen Erniedrigung der Wärmeformbeständigkeit. In (4) werden deshalb spezielle Phosphorsäureester vorgeschlagen, die eine erhöhte Vicattemperatur trotz guter flammhemmender Wirkung gewährleisten: Diese speziellen Phosphate sind allerdings kommerziell nicht erhältlich und aufwendig herzustellen. Außerdem haben Mischungen mit diesen Phosphaten nach wie vor eine unzureichende Kerbschlagzähigkeit.

Vinylische Doppelbindungen aufweisende und sauer radikalisch polymerisierbare Phosphate sind im Handel erhältlich und können nach Herstellerangaben als Flammschutzmittel eingesetzt werden. Über ihre Wirkung in PC/ABS bzw. PC/ASA-Blends ist allerdings nichts bekannt. Üblicherweise wird von den als Flammschutzmitteln eingesetzten Phosphaten eine gewisse Flüchtigkeit verlangt, da ansonsten die flammhemmenden Eigenschaften nicht auftreten.

Die Formmasse enthält folgende Anteile der Komponenten, jeweils bezogen auf die Summe der Komponenten A + B + C + D + E,

A) 40 bis 90 Gew.-%, vorzugsweise 50 bis 85 Gew.-%
B) 40 bis 90 Gew.-%, vorzugsweise 50 bis 85 Gew.-%
C) 5 bis 40 Gew.-%, vorzugsweise 6 bis 25 Gew.-%
D) 0 bis 20 Gew.-%, vorzugsweise 2 bis 15 Gew.-%
E) 0 bis 5 Gew.-%, vorzugsweise 0,01 bis 2 Gew.-%

Bezogen auf die Formmassen aus A bis E können außerdem bis zu 80 Gew.-% Zusatzstoffe vorhanden sein.

Unmittelbarer Erfindungsgegenstand ist daher eine flammwidrig ausgerüstete chlor- und bromfreie Formmasse mit hoher Wärmeformbeständigkeit und guter Kerbschlagzähigkeit, enthaltend, bezogen auf die Summe von A bis E,

A: 40-90 Gew.-% eines halogenfreien Polycarbonats A,
B: 5-40 Gew.-% mindestens eines halogenfreien Pfropfpolymerisats B, aufgebaut aus einpolymerisierten Einheiten (bezogen auf B) von
B1: 40-80 Gew.-% eines Elastomeren B1 mit einer Glastemperatur von unter 0 ° C,
B2: 20-60 Gew.-% einer Pfropfhülle B2 aus, bezogen auf B2,
B21: 40-98 Gew.-% Styrol, $\alpha$-Methylstyrol, kernsubstituiertem Styrol und/oder $C_1$-$C_8$-Alkyl(meth)-acrylat,
B22: 50-1 Gew.-% (Meth)acrylnitril und/oder Maleinsäureanhydrid,
B23: 1-50 Gew.-% einer organischen Phosphorverbindung der allgemeinen Formel (I)

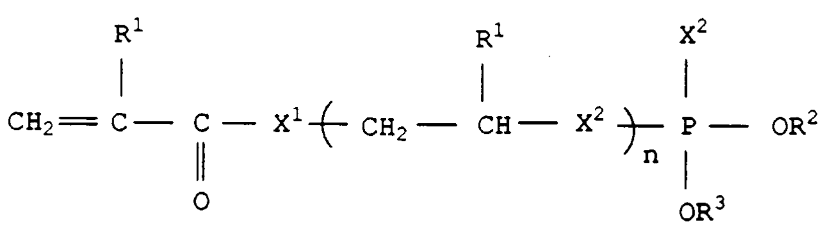

(I)

in der bedeutet:

$R^1$ = H oder $CH_3$

$R^2$, $R^3$ = jeweils unabhängig halogenfreies $C_1$-$C_8$-Alkyl oder halogenfreies, ggf. halogenfrei, substituiertes $C_6$-$C_{20}$-Aryl

$X^1$ ,$X^2$ ,$X^3$ = O, S, NR (wobei R Wasserstoff oder halogenfreies $C_1$-$C_8$-Alkyl bedeutet) und

n = 0 bis 10 ist,

C: 5-40 Gew.-% eines halogenfreien thermoplastischen Copolymerisats C aus, bezogen auf C,

C1: 50 bis 95 Gew.-% Styrol, αAlkylstyrol, kernsubstituiertem Styrol und/oder $C_1$-$C_8$-Alkyl-(meth)acrylaten (C1)

C2: 4 bis 50 Gew.-% (Meth)acrylnitril und/oder Maleinsäureanhydrid (C2)

C3: 1 bis 46 Gew.-% einer halogenfreien Phosphorverbindung der Formel (I)

D: bis 20 Gew.-% einer halogenfreien Phosphorverbindung der Formel (II)

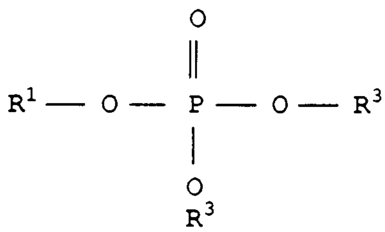

(II)

in der $R^1$, $R^2$, $R^3$ jeweils unabhängig halogenfreies $C_1$-$C_8$-Alkyl oder halogenfreies unsubstituiertes oder substituiertes $C_6$-$C_{20}$-Aryl bedeutet,

E: bis 5 Gew.-% eines Tetrafluorethylen-Polymerisats mit einer mittleren Teilchengröße von 0,05 bis 20 µm.

Bevorzugt hat eine erfindungsgemäße Formmasse folgende Zusammensetzung:

50 bis 85 Gew.-% A,
5 bis 25 Gew.-% B,
5 bis 40 Gew.-% C,
4 bis 15 Gew.-% D,
0,01 bis 2 Gew.-% E.

Bevorzugt ist das Elastomere B1 Polybutadien oder ein vernetzter Acrylatkautschuk aus (bezogen auf B11 + B12)

B11: 70 bis 99,9 Gew.-% mindestens eines Alkylacrylates B11 mit 4 bis 8 Kohlenstoffatomen im Alkylrest

B12: 0 bis 29,9 Gew.-% mindestens eines weiteren copolymerisierbaren monoethylenisch ungesättigten Monomeren

B13: 0,1 bis 15 Gew.-% mindestens eines polyfunktionellen, vernetzend wirkenden Monomeren B12.

## Komponente A

Erfindungsgemäß geeignete, thermoplastische halogenfreie aromatische Polycarbonate sind solche auf Basis der Diphenole der Formel

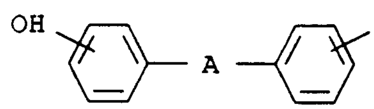

worin A eine Einfachbindung, eine $C_1$-$C_3$-Alkylen, $C_2$-$C_3$-Alkyliden, ein $C_3$-$C_8$-Cycloalkyliden, -S- oder -$SO_2$-sind.

Erfindungsgemäß geeignete Polycarbonate gemäß Komponente A sind sowohl Homopolycarbonate als auch Copolycarbonate.

Die Diphenole der Formel (I) sind entweder literaturbekannt oder nach literaturbekannten Verfahren herstellbar.

Die Herstellung der erfindungsgemäß geeigneten Polycarbonate gemäß Komponente A ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-tert.-Butylphenol aber auch langkettige Alkylphenole wie 4-(1,3-Tetramethylbutyl)-phenol, gemäß DE-OS 28 42 005 oder Monoalkylphenole oder Dialkylphenole mit insgesamt 8 bis 20 C-Atomen in den Alkylsubstituenten gemäß deutscher Patentanmeldung P 35 06 472.2 (Le A 23 654), wie beispielsweise p-Nonylphenol, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Die erfindungsgemäß geeigneten Polycarbonate gemäß Komponente A weisen relative Viskositäten $\eta_{rel}$ von 1,10 bis 1,50, insbesondere von 1,25 bis 1,40 auf. Dies entspricht mittleren Molekulargewichten $M_w$ von 10.000 bis 200.000, vorzugsweise von 20.000 bis 80.000.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan.

Bevorzugte Diphenole der Formel (I) sind 2,2-Bis-(4-hydroxyphenyl)-propan und 1,1-Bis-(4-hydroxyphenyl)-cyclohexan.

Die erfindungsgemäß geeigneten Polycarbonate gemäß Komponente A können in bekannter Weise verzweigt sein, und zwar vorzugsweise durch den Einbau von 0,05 bis 2,0 mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol A-Homopolymerisat die Copolycarbonate von Bisphenol A.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigungen aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Die Pfropfpolymerisate B sind als ABS- oder ASA-Kautschuke bekannt.

Diese ABS-Pfropfmischpolymerisate sind aufgebaut, jeweils bezogen auf B, aus einem Polybutadienkautschuk B1 als Elastomerkomponente, der 40 bis 80 Gew.-% ausmacht und einer darauf gepfropften Hülle B2, die 20 bis 60 Gew.-% ausmacht. Als Kautschuk kommen Polybutadien (vgl. DE-A 14 20 775 und DE-A-14 95 089) und Copolymerisate aus Polybutadien und Styrol in Betracht (vgl. GB-PS 649 166). Der Kautschuk B1 soll eine Glastemperatur (nach K.H. Illers und H. Breuer, Kolloid-Z. 167 (1961), Seite 110) haben, die unter -40 °C, bevorzugt unter -60 °C liegt.

Die Pfropfhülle B2 ist entweder aufgebaut aus - jeweils bezogen auf B2 - 40 bis 98 Gew.-% Styrol, α-Methylstyrol, kernalkyliertem Styrol oder $C_1$-$C_8$-Alkyl(meth)acrylat, 1 bis 50 Gew.-% (Meth)acrylnitril oder Maleinsäureanhydrid, sowie 1 bis 50 Gew.-% der organischen Phosphor-verbindung der allgemeinen Formel (I).

Die Pfropfmischpolymerisation kann wie bekannt in Lösung, Suspension oder vorzugsweise in Emulsion erfolgen. Die Weichphase des Pfropfmischpolymerisats weist, bei der bevorzugten Herstellung des Kautschuks und der Pfropfung in Emulsion, einen mittleren Teilchendurchmesser ($d_{50}$-Wert der integralen Masseverteilung) von 0,08 µm auf. Durch Vergrößerung der Teilchen, z.B. durch Agglomeration oder bei der Gewinnung der Emulsion im Wege des Saatlatex-Verfahrens, wird der $d_{50}$-Wert im Bereich von 0,2 bis 0,5 µm eingestellt. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenden Doppelbindungen erfolgt. Zumindest ein Teil der Monomeren ist also auf den Kautschuk gepfropft, also durch covalente Bindungen an den Kautschuk-Fadenmolekülen gebunden.

Die Pfropfung kann auch mehrstufig erfolgen, indem zuerst ein Teil der die Pfropfhülle bildenden Monomere und anschließend der Rest aufgepropft wird.

Der Aufbau und die Herstellung der ASA-Kautschuke sind beispielsweise in DE-OS 28 26 925, DE-OS 31 49 358 und DE-OS 34 14 118 beschrieben.

Die Komponente B wird vorzugsweise gebildet aus:

B1: mindestens einem Elastomeren (Kautschuk), das 40 bis 80 Gew.-%, bezogen auf B), ausmacht

und aus einer Monomermischung aus

B11: 70 bis 99,9 Gew.-%, bezogen auf B1, mindestens eines Alkylacrylats mit 1 bis 8 Kohlenstoffatomen im Alkylrest

B12: 0 bis 30 Gew.-%, bezogen auf B1, mindestens eines weiteren copolymerisierbaren monoethylenisch ungesättigten Monomeren

und

B13: 0,1 bis 5 Gew.-%, bezogen auf B1, eines copolymerisierbaren polyfunktionellen, vernetzenden Monomeren

polymerisiert wird und

B2: einer Pfropfhülle auf dieses Elastomere, die 20 bis 60 Gew.-%, bezogen auf B), ausmacht und aufgebaut ist aus

B21: 40 bis 98 Gew.-% Styrol, α-Methylstyrol, kernsubstituiertem Styrol, $C_1$-$C_8$-Alkyl(meth)acrylat oder Mischungen daraus, und

B22: 50 bis 1 Gew.-% (Meth)acrylnitril, Maleinsäureanhydrid oder Mischungen daraus

B23: 50 bis 1 Gew.-% einer organischen Phosphorverbindung der allgemeinen Formel I

besteht.

Als Monomere für die Herstellung des Elastomeren B1 kommen in Betracht:

B11: 70 bis 99,9 Gew.-%, vorzugsweise 99 Gew.-%, bezogen auf B1 eines Alkylacrylates mit 1 bis 8 C-Atomen im Alkylrest, vorzugsweise werden n-Butylacrylat und/oder 2-Ethyl-hexylacrylat angewendet, insbesondere n-Butylacrylat als alleiniges Alkylacrylat.

B12: Gegebenenfalls kann das elastomere Polymerisat B1 auch noch bis zu 30, insbesondere 20 bis 30 Gew.-%, jeweils bezogen auf B1 eines weiteren copolymerisierbaren Monomeren B12, wie Butadien, Isopren, Styrol, Acrylnitril, Methylmethacrylat und/oder Vinylmethylether enthalten.

B13: Um vernetzte Acrylsäureester-Polymerisate zu erhalten, wird die Polymerisation der Acrylsäureester in Gegenwart von 0,1 bis 5 Gew.-%, vorzugsweise von 1 bis 4 Gew.-%, bezogen auf die bei der Herstellung der Pfropfgrundlage eingesetzten gesamten Monomeren, eines copolymerisierbaren, polyfunktionellen, vorzugsweise bi- oder trifunktionellen, die Vernetzung bewirkenden Monomeren B13 durchgeführt. Als solche bi- oder polyfunktionellen Vernetzungsmonomeren B13 eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanat. Als besonders günstiges Vernetzungsmonomeres hat sich der Acrylsäureester des Tricyclodecenylalkohols erwiesen (vgl. DE-PS 12 60 135).

Die Kautschuke liegen in den Pfropfpolymerisaten B) in Form wenigstens partiell vernetzter Teilchen einer mittleren Teilchengröße von 50 bis 700 nm vor ($d_{50}$-Wert der integralen Masseverteilung).

Um dies zu erreichen, werden die Teilchen des Kautschuks in bekannter Weise, z.B. durch Agglomeration, vergrößert, so daß der Latex bimodal (50 bis 180 nm und 200 bis 700 nm) aufgebaut ist. Es kann aber auch durch Saatfahrweise direkt eine grobteilige Kautschukdispersion hergestellt werden.

Die Herstellung des Pfropfmischpolymerisats B kann beispielsweise nach der in der DE-PS 12 60 135 beschriebenen Methode erfolgen.

Der Aufbau der Pfropfhülle des Pfropfmischpolymerisats kann ein- oder zweistufig erfolgen, wobei vorzugsweise das grobteilige Produkt zweistufig (gepfropft) aufgebaut ist.

Im Falle eines zweistufigen Aufbaus der Pfropfhülle B2 macht die 1. Stufe 20 bis 70 Gew.-%, vorzugsweise 25 bis 50 Gew.-%, bezogen auf B2, aus. Zu ihrer Herstellung werden nur monoethylenisch-ungesättigte aromatische Kohlenwasserstoffe mit bis zu 12 C-Atomen B21 verwendet.

Die 2. Stufe der Pfropfhülle macht 30 bis 80 Gew.-%, insbesondere 50 bis 75 Gew.-%, jeweils bezogen auf B2, aus. Zu ihrer Herstellung werden Mischungen aus den genannten monoethylenisch ungesättigten aromatischen Kohlenwasserstoffen B21 und monoethylenisch ungesättigten Monomeren B22 im Gewichtsverhältnis B21/B22 von 90:10 bis 60:40, insbesondere 80:20 bis 70:30 angewendet.

Als bevorzugte Monomeren-Gemische werden vor allem Styrol und Acrylnitril, α-Methylstyrol und Acrylnitril, Styrol, Acrylnitril und Methylmethacrylat, Styrol und Maleinsäureanhydrid eingesetzt.

Die bei der Herstellung des Pfropfmischpolymerisats B) entstehenden, nicht gepfropften Anteile an Copolymerisaten aus den Pfropfmischmonomeren B21 und/oder B22 werden im Sinne der vorliegenden Erfindung der Komponente B zugerechnet.

Die Bedingungen der Pfropfmischpolymerisation sind so zu wählen, daß Teilchengrößen von 60 bis 1000 nm ($d_{50}$-Wert der integralen Massenverteilung) resultieren, Maßnahmen hierzu sind bekannt und z.B. in der DE-PS 12 60 135 und der DE-OS 28 26 925 beschrieben.

Um möglichst zähe Produkte zu erzielen, ist es häufig von Vorteil, eine Mischung mindestens zweier Pfropfmischpolymerisate mit unterschiedlicher Teilchengröße zu verwenden.

Der chemische Aufbau der beiden Pfropfmischpolymerisate B1 und B2 ist vorzugsweise derselbe, obwohl die Hülle des grobteiligen Pfropfmischpolymerisates insbesondere auch zweistufig aufgebaut werden kann.

In einer bevorzugten Ausführungsform wird eine Mischung aus zwei Pfropfmischpolymerisaten mit Teilchendurchmessern ($d_{50}$-Wert der integralen Massenverteilung) von 50 bis 180 nm bzw. 200 bis 700 nm im Gewichtsverhältnis 70:30 bis 30:70 eingesetzt.

Mischungen aus der Komponente A und B, wobei letztere ein grob- und ein feinteiliges Pfropfmischpolymerisat aufweist, sind z.B. in der DE-OS 36 15 607 beschrieben. Mischungen aus der Komponente A und B, wobei letztere eine zweistufige Pfropfhülle aufweist, sind aus EP 111 260 bekannt.

Komponente C

Bevorzugte halogenfreie Copolymerisate gemäß Komponente C sind solche aus wenigstens einem Monomeren aus der Reihe Styrol, α-Alkylstyrol, insbesondere α-Methylstyrol, kernalkylierte Styrole, insbesondere p-Methylstyrol, $C_1$-$C_8$-Alkyl(meth)acrylat, insbesondere Methylmethacrylat mit wenigstens einem Monomeren aus der Reihe Acrylnitril, Methacrylnitril, Methylmethacrylat, Maleinsäureanhydrid sowie wenigstens einem der polymerisierbaren Phosphate der allgemeinen Formel (I) sowie wenigstens einem der polymerisierbaren Phosphate der allgemeinen Formel (I).

Die Copolymerisate C sind harzartig, thermoplastisch und kautschukfrei. Besonders bevorzugte Copolymerisate C sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat und aus Styrol und Maleinsäureanhydrid.

Komponente D

Die erfindungsgemäß geeigneten halogenfreien Phosphorverbindungen D sind generell bekannt (siehe beispielsweise Ullmann, Enzyklopädie der technischen Chemie, Bd. 18, S. 301 ff, 1979; Houben-Weyl, Methoden der organischen Chemie, Bd. 12/1, S. 43, S. 136; Beilstein, Bd. 6, S. 177).

Erfindungsgemäß geeignete Phosphorverbindungen D, Formel (II) sind beispielsweise Tri-(2,6-dimethylphenyl)-phosphat, Triphenylphosphat, Trikresylphosphat, Diphenyl-2-ethyl-kresylphosphat, Diphenyl-kresylphosphat, Tri-(isopropylphenyl)-phosphat.

Um eine erhöhte Vicat-Temperatur in den Mischungen einzustellen, können auch Mischungen der oben genannten Phosphate mit z.B. Triphenylphosphinoxid oder Tri(2,6-dimethylphenyl)phosphinoxid eingesetzt werden.

Weiterhin sind die in der DE-OS 38 24 356 genannten Phosphate wie z.B.
Phosphorsäure-bis-phenyl(4-phenylphenyl)-ester
Phosphorsäure-phenyl(bis-(4-phenylphenyl)-ester
Phosphorsäure-tris-(4-phenylphenyl)-ester
Phosphorsäure-bis-phenyl-(benzylphenyl)-ester
Phosphorsäure-phenyl-bis-(benzylphenyl)-ester
Phosphorsäure-tris-(benzylphenyl)-ester
Phosphorsäure-phenyl-bis-[(1-phenylethyl)-phenyl]-ester
Phosphorsäure-phenyl-bis-[4-(1-phenylethyl)-2,6-dimethylphenyl]-ester
zur Erhöhung der Vicattemperatur der Mischungen geeignet.

Komponente E

Die erfindungsgemäß geeigneten Tetrafluorethylenpolymerisate (Komponente E) sind Polymere mit Fluorgehalten von 65 bis 76 Gew.-%, vorzugsweise 70 bis 76 Gew.-%. Beispiele sind u.a. Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Derartige Polymerisate sind bekannt. Sie können nach bekannten Verfahren hergestellt werden, so beispielsweise durch Polymerisation von Tetrafluorethylen in wäßrigem Medium mit einem freien Radikale bildenden Initiator, beispielsweise

Natrium-, Kalium- oder Ammoniumperoxidisulfat bei Drücken von 7,71 kg/$m^2$ und bei Temperaturen von 0 bis 200 °C, vorzugsweise bei Temperaturen von 20 bis 100 °C (nähere Einzelheiten siehe beispielsweise US-Patent 2 393 967).

Die erfindungsgemäßen geeigneten Polytetrafluorethylene haben mittlere Teilchengrößen von 0,05 bis 20 µm, vorzugsweise 0,08 bis 10 µm und eine Dichte von 1,2 bis 1,9 g/$cm^3$. Durch Zusatz von Tetrafluorethylenpolymerisaten wird insbesondere das Abtropfen der Formmassen während des Brandvorgangs reduziert oder ganz verhindert.

Die wäßrige Dispersion des PTFE-Polymeren kann entweder auf das Granulat im Fluidmischer aufgezogen werden, oder in die Schmelze der Komponente C in einem Extruder mit Entgasung eingebracht werden.

Weiterhin können auch Emulsionen der Komponente B mit Emulsionen der Komponente F vereinigt und mittels Salzlösung gefällt werden.

Komponente F

Die Formmasse kann weiterhin übliche Zusatzstoffe enthalten. Genannt seien

- Kohlenstoff-Fasern,
- Glasfasern usw.

Die verwendeten Glasfasern können aus E-, A- oder C-Glas sein. Sie sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden.

- Füll- oder Verstärkungsstoffe, wie Glaskugeln, Mineralfasern, Whisker, Aluminiumoxidfasern, Glimmer, Quarzmehl, Wollastonit etc.
- Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagstoffe, die elektromagnetische Wellen abschirmen. Insbesondere kommen Al-Flocken (K 102 der Fa. Transmet) in Mengen von 30 bis 70 Gew.-Teilen, bezogen auf die flammfeste Formmasse aus 100 Gew.-Teile A bis E für EMI-Zwecke (elektromagnetic interference) in Betracht; ferner Abmischen dieser Masse mit zusätzlichen Kohlenstoff-Fasern oder Leitfähigkeitsruß oder nickelbeschichteten C-Fasern.

Die erfindungsgemäße Formmasse kann ferner weitere Zusatzstoffe enthalten, die für Polycarbonate, SAN-Polymerisate und Pfropfmischpolymerisate auf Basis von ASA oder ABS oder deren Mischungen typisch und gebräuchlich sind. Als solche Zusatzstoffe seien beispielsweise genannt: Farbstoffe, Pigmente, Antistatika, Antioxidantien und insbesondere die Schmiermittel, die für die Weiterverarbeitung der Formmasse, z.B. bei der Herstellung von Formkörpern bzw. Formteilen erforderlich sind.

Die Zusatzstoffe (Komponente F) können in Mengen von 0,05 bis 80 Gew.-%, bezogen auf 100 Teile der Summe der Komponenten A bis F, der Mischung zugesetzt werden.

Hierbei werden Verarbeitungshilfsmittel und Stabilisatoren üblicherweise in Mengen ≧ 2 % verwendet.

Verstärkungsmittel wie Glasfasern, C-Fasern etc. werden üblicherweise in Mengen ≧ 5 % bis 80 °C, bezogen auf die Summe von A bis E, zugesetzt.

Herstellung der Formmasse

Die Herstellung der erfindungsgemäßen Formmasse erfolgt durch Mischung der Komponenten. Es kann vorteilhaft sein, einzelne Komponenten vorzumischen. Auch das Mischen der Komponenten in Lösung und Entfernen der Lösungsmittel ist möglich.

Geeignete organische Lösungsmittel für die Komponenten A bis E und die Zusätze der Gruppe F sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten A, B, C, D, E und gegebenenfalls F kann nach allen bekannten Methoden erfolgen. Vorzugsweise geschieht jedoch das Mischen der Komponenten A, B, C, D, E und gegebenenfalls F bei Temperaturen von 200 bis 320 °C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation (Komponente B) können zusammen mit der Komponente E koaguliert, gefällt und teilweise entwässert oder direkt als Dispersionen mit der Komponente C und dann mit dem Polycarbonat A und der Komponente D, vermischt werden, wobei dann während des

Vermischens die vollständige Trocknung der Komponenten B und E erfolgt. Außerdem kann die Emulsion der Komponente E unter Entgasung in einem Extruder in eine Schmelze der Komponente C eingegossen werden und im selben Extruder nach der Entgasung die weiteren Komponenten A, B und D zudosiert werden.

Geeignete Mischaggregate für die Durchführung des erfindungsgemäßen Verfahrens sind beispielsweise übliche Taumelmischer oder Rührwerksmischer.

Geeignete Aggregate für die Schmelzcompoundierung sind beispielsweise diskontinuierlich arbeitende, beheizte Innenkneter mit oder ohne Stempel, kontinuierlich arbeitende Innenkneter, Schneckenkneter mit axial oszillierenden Schnecken, Zweiwellenextruder sowie Mischwalzwerke mit beheizten Walzen.

Geeignete Aggregate für die Schmelzextrusion sind beispielsweise Ein- und Zweiwellenextruder.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern; besonders bevorzugt werden aus den nach dem erfindungsgemäßen Verfahren hergestellten Formmassen Formteile durch Spritzgießen für den Automobilbau, den Bausektor, für Büromaschinen, elektrische Geräte und Haushaltsgeräte hergestellt.

Die in den nachstehenden Beispielen verwendeten Parameter werden wie folgt bestimmt:

- Die mittlere Teilchengröße und die Teilchengrößenverteilung wurde aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z. f. Polymere 250 (1972), Seiten 782 bis 796, bestimmt wurden. Die Ultrazentrifugenmessung liefert die integrale Massenverteilung des Teilchendurchmessers einer Probe. Hierzu läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{50}$-Werte herangezogen. Der $d_{10}$- und der $d_{90}$-Wert der integralen Massenverteilung sind dabei entsprechend dem $d_{50}$-Wert definiert, mit dem Unterschied, daß sie auf 10 bzw. 90 Gew.-% der Teilchen bezogen sind. Der Quotient Q

$$Q = \frac{d_{90} - d_{10}}{d_{50}}$$

stellt ein Maß für die Verteilungsbreite der Teilchengröße dar.
- Der Schmelzindex MFI in g/10 min wurde nach DIN 53735 bei einer Temperatur von 260 ° C und einer Belastung von 5 kg bestimmt.
- Die Wärmeformbeständigkeit Vicat B/50 wurde an Stäben der Abmessung 50 x 6 x 4 mm nach DIN 53 460 bestimmt.
- Die relative Lösungsviskosität $\eta_{rel}$ des eingesetzten Polycarbonats wurde in einer 0,5 % igen Lösung in Methylenchlorid bei 23 ° C gemessen.
- Die Viskositätszahl, VZ, der Copolymerisate C wurde in 0,5 %iger Lösung in Dimethylformamid bei 23 ° C bestimmt.

Für die Herstellung erfindungsgemäße Formmassen und Massen für Vergleichsversuche wurden die nachfolgend beschriebenen Produkte verwendet.

Komponente A

Als Komponente B-1 wurde ein handelsübliches Polycarbonat auf Basis von Bisphenol A mit einer relativen Lösungsviskosität von 1,30 ml/g eingesetzt.

Komponente B

Als Komponente B-1 wurden die im folgenden beschriebenen Pfropfmischpolymerisate eingesetzt.
(b) Herstellung eines grobteiligen Pfropfmischpolymerisats B
($a_1$) 16 Teile Butylacrylat und 0,4 Teile Tricyclodecenylacrylat werden in 150 Teilen $H_2O$ unter Zusatz von einem Teil des Na-Salzes einer $C_{12}$-$C_{18}$-Paraffinsulfonsäure, 0,3 Teile $K_2S_2O_8$, 0,3 Teile $NaHCO_3$ und 0,15 Teile Natriumpyrophosphat unter Rühren auf 60°C erwärmt. 10 min. nach dem Anspringen werden innerhalb von 3 Stunden eine Mischung aus 82 Teilen n-Butylacrylat und 1,6 Teilen Tricyclodecenacrylat zugegeben. Nach Zulaufende wurde noch 1 Stunde nachgerührt. Der erhaltene Latex hatte einen Feststoffgehalt von 40 %. Die mittlere Teilchengröße (Gewichtsmittel) wurde zu 76 nm ermittelt. Die Teilchengrößenverteilung war eng (Quotient Q = 0,29).
($b_1$) Zu einer Vorlage aus 1,5 Teilen des in der Stufe ($a_1$) hergestellten Latex wurden nach Zugabe von 50 Teilen Wasser und 0,1 Teilen Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$-$C_{18}$-Paraffinsulfonsäure in 25 Teilen Wasser bei 60°C zugegeben. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt. Die Teilchengrößenverteilung war eng (Q = 0,1).
($b_2$) 150 Teile dieses Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei dieser Pfropfmischpolymerisation erhaltene Dispersion wurde dann mit 20 Teilen eines Gemisches aus Styrol und Acrylnitril im Verhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.

Herstellung von B-2

Wie B-1, jedoch statt 20 Teilen Styrol 20 Teile polymerisierbares Phosphat Ia, und statt 20 Teilen Styrol/Acrylnitril 10 Teile polymerisierbares Phosphat Ia und 10 Teile Styrol/Acrylnitril 75/25

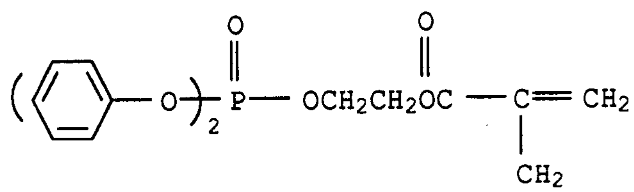

Ia

Komponente C

Durch kontinuierliche Lösungspolymerisation nach einem Verfahren, wie es beispielsweise im Kunststoff-Handbuch, Vieweg-Daumiller, Band V (Polystyrol), Carl-Hanser-Verlag, München, 1969, Seite 124, Zeilen 12 ff, beschrieben ist, wurde folgendes Copolymerisat hergestellt:
C-1: Styrol/Acrylnitril = 81/19
C-2: Styrol/Acrylnitril/Phosphat Ia im Verhältnis 65/15/20.

Komponente D

Triphenylphosphat

Komponente E

Wäßrige PTFE-Dispersion mit einem Feststoffgehalt von 60 Gew.-% und einer Teilchengröße von 0,23 µm. Dichte des gesinterten Feststoffs 2,3 $g/cm^3$ (Dupont, Typ 30 N).

Verarbeitung

Die Emulsion des PTFE wurde mit der Emulsion der jeweiligen Pfropfpolymerisate B vermischt und mit 0,4 Gew.-% bezogen auf den Polymer-Feststoff phenolische Antioxidantien stabilisiert. Bei 85 bis 95 ° C werden die Mischungen mit einer wäßrigen Lösung aus Magnesiumsulfat koaguliert, filtriert und bis zur praktischen Elektrolytfreiheit gewaschen. Anschließend wird durch Zentrifugation die Hauptmenge Wasser entfernt und danach bei 100 ° C zu Pulver getrocknet.

Das Pulver der Komponenten B und E wurde gemeinsam mit den weiteren Komponenten A, C, D in trockener Form auf einen Fluidmischer gemischt und bei 260 ° C auf einem Doppelschneckenextruder der Fa. Werner & Pfleiderer (ZSK 30) extrudiert. Hieraus wurden die erforderlichen Testkörper durch Spritzguß bei 250 ° C hergestellt.

Tabelle

| Abmischungen mit Phosphat in der Pfropfhülle und in der SAN-Matrix | | | | | | | |
|---|---|---|---|---|---|---|---|
| | 1 | 2 | 3 | 4 | 5 | 6 | 7 |
| A | 64,65 | 64,65 | 64,65 | 64,65 | 64,65 | 64,65 | 64,65 |
| B-1 | - | - | - | - | - | - | 8 |
| B-2 | 8 | 8 | 8 | 8 | 8 | 8 | - |
| C-1 | 9 | 9 | 9 | 9 | 9 | 9 | 16 |
| C-2 | 6 | 7 | 8 | 10 | 12 | 14 | - |
| D | 12 | 11 | 10 | 8 | 6 | 4 | 11 |
| E | 0,35 | 0,35 | 0,35 | 0,35 | 0,35 | 0,35 | 0,35 |
| MFI | > 250 | > 250 | > 250 | 174 | 113 | 93 | 53 |
| 7 (V) : Vergleichsversuch | | | | | | | |

**Patentansprüche**

**1.** Formmasse, enthaltend, bezogen auf die Summe von A bis E,

A: 40-90 Gew.-% eines halogenfreien Polycarbonats A,

B: 5-40 Gew.-% mindestens eines halogenfreien Propfpolymerisats B, aufgebaut aus einpolymerisierten Einheiten (bezogen auf B) von

B1: 40-80 Gew.-% eines Elastomeren B1 mit einer Glastemperatur von unter 0 ° C.

B2: 20-60 Gew.-% einer Pfropfhülle B2 aus, bezogen auf B2

B21: 40-98 Gew.-% Styrol, α-Methylstyrol, kernsubstituiertem Styrol und/oder $C_1$-$C_8$-Alkyl-(meth)acrylat,

B22: 50-1 Gew.-% (Meth)acrylnitril und/oder Maleinsäureanhydrid,

B23: 1-50 Gew.-% einer organischen Phosphorverbindung der allgemeinen Formel (I)

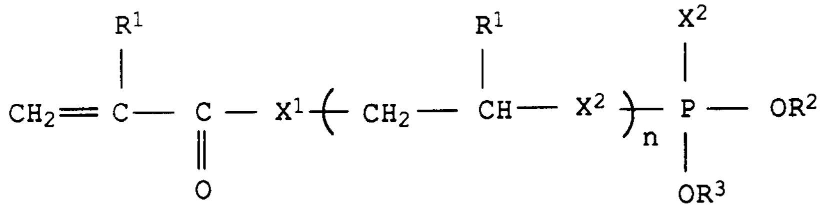

(I)

in der bedeutet:

$R^1$ = H oder $CH_3$

$R^2$, $R^3$ = jeweils unabhängig halogenfreies $C_1$-$C_8$-Alkyl oder halogenfreies, ggf. halogenfrei,

substituiertes $C_6$-$C_{20}$-Aryl

$X^1$, $X^2$, $X^3$ = O, S, NR (wobei R Wasserstoff oder halogenfreies $C_1$-$C_8$-Alkyl bedeutet und

n = 0 bis 10 ist

C: 5-40 Gew.-% eines halogenfreien thermoplastischen Copolymerisats C aus, bezogen auf C,

C1: 50 bis 95 Gew.-% Styrol, eines α-Alkylstyrols, kernsubstituierten Styrols und/oder $C_1$-$C_8$-Alkyl-(meth)acrylats (C1)

C2: 4 bis 50 Gew.-% (Meth)acrylnitril, $C_1$-$C_8$-Alkyl(meth)acrylat und/oder Maleinsäureanhydrid (C2)

C3: 1 bis 46 Gew.-% einer halogenfreien Phosphorverbindung der Formel (I)

D: bis 20 Gew.-% einer halogenfreien Phosphorverbindung der Formel (II)

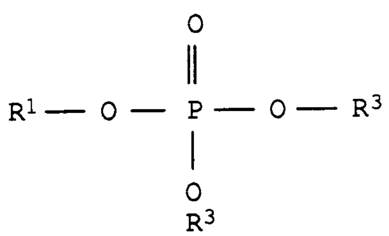

(II) ,

in der $R^1$, $R^2$, $R^3$ jeweils unabhängig halogenfreies $C_1$-$C_8$-Alkyl oder halogenfreies unsubstituiertes oder substituiertes $C_6$-$C_{20}$-Aryl bedeutet,

E: bis 5 Gew.-% eines Tetrafluorethylen-Polymerisats mit einer mittleren Teilchengröße von 0,05 bis 20 µm.

**2.** Formmasse, enthaltend

50 bis 85 Gew.-% A,
5 bis 25 Gew.-% B,
5 bis 40 Gew.-% C,
4 bis 15 Gew.-% D,
0,01 bis 2 Gew.-% E.